# EUROPEAN PATENT SPECIFICATION

(11) **EP 0 347 155 B1**
(45) Date of publication and mention of the grant of the patent: **23.09.1998**
(21) Application number: 89305941.0
(22) Date of filing: 13.06.1989
(51) Int. Cl.: H04Q 11/04, H04M 11/06, H04M 3/42, H04M 1/57

(54) **Communication apparatus storing caller information and method of operating said apparatus**
Kommunikationsgerät mit gespeicherter Information über den Anrufer und Betriebsverfahren dieses Geräts
Appareil de communication memorisant de l'information relative à l'appelant, et procédé de fonctionnement de cet appareil

(30) Priority: 13.06.1988 JP 143761/88; 27.06.1988 JP 156931/88; 15.08.1988 JP 201933/88; 01.12.1988 JP 304664/88
(43) Date of publication of application: 20.12.1989
(73) Proprietor: CANON KABUSHIKI KAISHA, Ohta-ku Tokyo 146 (JP)
(72) Inventor: Izumi, Michihiro Canon Daiichi Ichigaoryo, Yokohama-shi Kanagawa-ken (JP); Takashima, Shoichi, Tokyo (JP)
(74) Representative: Beresford, Keith Denis Lewis

(56) References cited:
- DE-A- 3 128 529
- US-A- 4 266 098
- US-A- 4 277 649
- US-A- 4 304 968
- US-A- 4 672 660
- US-A- 4 802 202
- PATENT ABSTRACTS OF JAPAN, vol. 8, no. 176 (E-260)[1613], 14th August 1984 & JP-A-59 70 345

## Description

### BACKGROUND OF THE INVENTION

### Field of the Invention

The present invention relates to a communication apparatus for voice data, image data, code data or the like, and more particularly to a communication apparatus connected to a communication network having a function to transmit information for discriminating a calling party.

### Relating Background Art

A conventional analog telephone network is not provided with a function to notify a called party of information for discriminating a calling party, e.g. a telephone number of a calling party. An integrated Service Digital network (ISDN) can transmit a discrimination number of a calling party to a called party. As an example of utilizing such a discrimination number, there has been proposed to display the calling party telephone number received from the network on the called party terminal equipment. The present applicant has filed US-A-5073922, US-A-5142525 and US-A-5001709 relevant to the ISDN.

The above-described terminal equipment connected to the ISDN simply displays a calling party number as it is. Therefore, an operator knowing the number can only discriminate the calling party. From this point of view, display of the calling party number does not give any particular advantages over a conventional analog telephone network.

Even with such display under the ISDN service, a user must mentally prepare for responding to a particular calling party. In addition, if a terminal equipment is used by a plurality of persons, since only a person knowing the number can discriminate the calling party, not a particular called person but another person may respond to the call unnecessarily, thus posing a problem of wasteful call response.

The connection method used by an exchange such as a private branch exchange (PBX) or a key telephone set (KTS) includes a call reception ringing method which connects a call to each extension within the service area and a call reception transfer method which transfers a call to another office line. The present applicant has filed US-A-5222126 and US-A-5095504 in connection with KTS.

As well as the call reception ringing methods for PBX and KTS by which, upon detection of a call from the external line, it is determined which extension or extensions are to be rung, there is a concentrated call reception method and a distributed call reception method. With the former method, a single extension is registered previously for each external line accommodated within an exchange so that the internal lines can be controlled based on the external line receiving a call. With the latter method, a call is distributed to a plurality of internal lines previously designated for each external line. There is also known a dial-in service whereby a call is sent to a single internal line in accordance with a selection signal received from a central office after detection of a call.

With the known call reception transfer method, a call reception is temporarily suspended, and after another external line is established, a predetermined telephone number is sent via the established external line. After detecting a response from the external line, it is connected to the suspended call reception external line to conduct speech communication.

The above conventional methods do not discriminate between calling parties. Therefore, in the distributed call reception method for example, a plurality of extensions previously registered are rung, which extensions will include those not associated with the calling party.

US Patent 4277649 describes a telephone system in which a called customer has a screening memory by means of which he can screen incoming calls according to the identity of the calling line. Services such as priority ringing, selective call waiting and selective call forwarding can be provided. Attention is also drawn to German Patent 3128529, which deals with the display of information at the called customer's station.

### SUMMARY OF THE INVENTION

According to the present invention, an improved technique is provided with a communication apparatus as set out in claim 1 and a method of operating said apparatus as set out in claim 12. The remaining claims set out optional features.

An embodiment of the invention will be described with reference to the accompanying drawings.

### BRIEF DESCRIPTION OF THE DRAWINGS

Fig. 1 is an explanatory block diagram ;
Fig. 2 shows a front view of a telephone set;
Fig. 3 is a flow chart showing the operation of registering a calling party telephone number;
Fig. 4 is a flow chart showing the operation of receiving a call;
Fig. 5 is a block diagram showing the structure of a digital telephone set embodying the invention ;
Figs. 6A and 6B show the formats of RAM shown in Fig. 5;
Fig. 7 is a flow chart showing the control procedure executed by CPU shown in Fig. 5; and
Figs. 8 and 9 show the formats of RAM partially changed from the formats shown in Figs. 6A and 6B.

### DETAILED DESCRIPTION OF THE PREFERRED EMBODIMENT

The preferred embodiment of this invention will be described in detail with reference to the accompanying drawings.

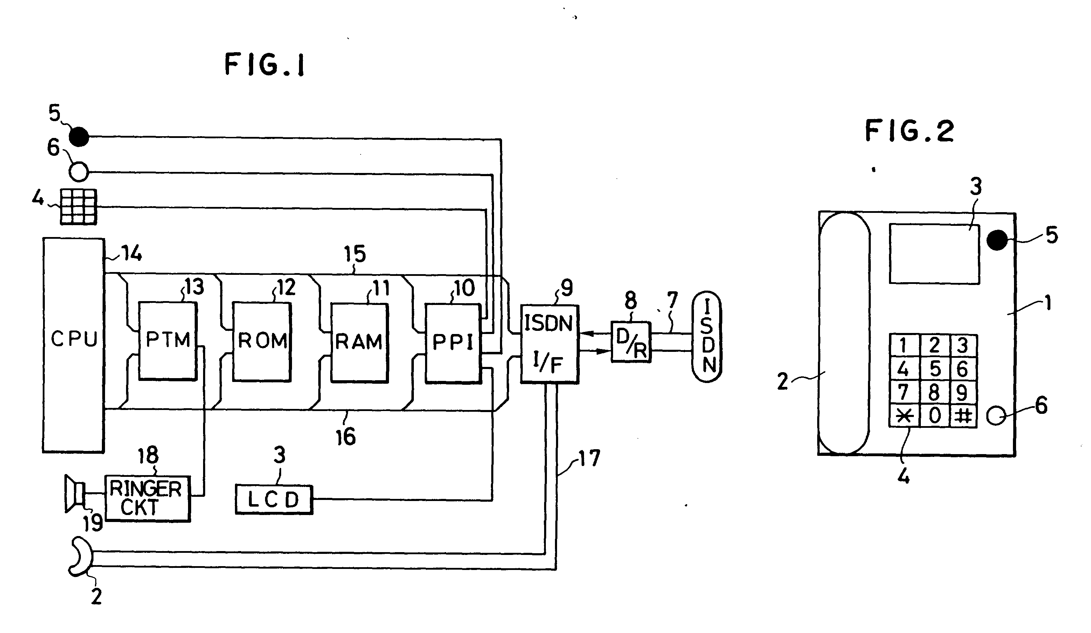

Fig. 1 is a block diagram showing a digital telephone set 1. In Fig. 1, reference numeral 2 represents a handset, 3 a liquid crystal display panel (hereinafter called LCD), 4 dial keys, 5 a light emitting diode (hereinafter called LED) serving as notifying means of this invention, and 6 a registration key used for registering particular telephone number information. Reference number 7 represents integrated services digital network (ISDN) lines, 8 a driver (D/R), 9 and ISDN interface circuit (ISDN I/F), 10 to input/output port (PPI), 11 a RAM for storing a telephone number inputted by using the registration key 6 and dial keys 4, 12 a ROM for storing the control programs to be executed by CPU 14 and described later, 13 a timer (PTM) for generating a pattern of calling sounds, 15 an address bus, 16 a data bus, 17 an ISDN B channel (communication channel), 18 a ringer circuit, and 19 a loudspeaker. Fig. 2 is a front view of the digital telephone set.

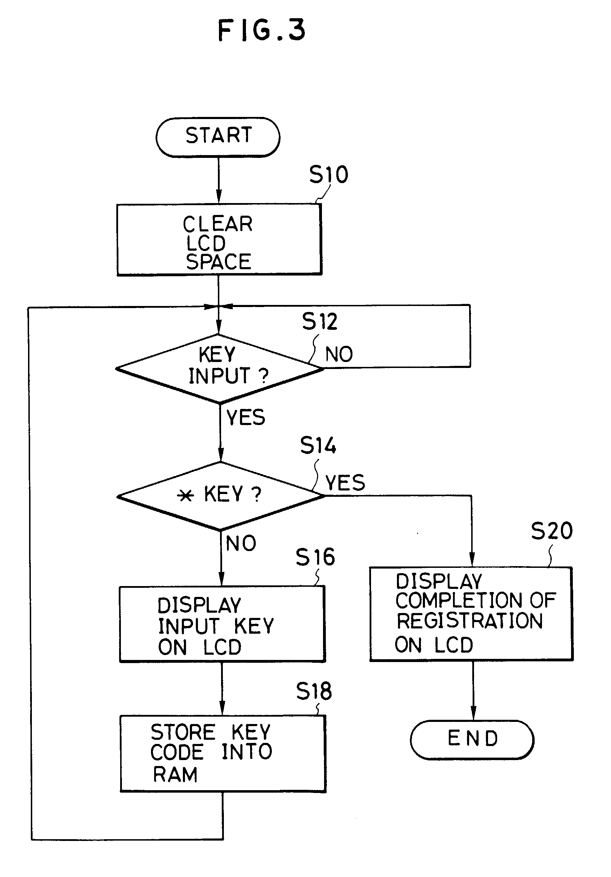

Next, the operation of registering a telephone number of an intimate friend or the like which is desired to be discriminated upon call reception, will be described with reference to the flow chart shown in Fig. 3. Programs as illustrated in the flow chart are stored in ROM 12 and executed by CPU 14.

A telephone number is registered by using the registration key 6 and dial keys 4. First, an operator depresses the registration key 6. PPI 10 detects and notifies of it to CPU 14 which in turn prepares for a registration mode and starts the registration operation. At step S10, a space clear command for clearing LCD 3 is outputted to PPI 10 so that dial numbers to be inputted with the dial keys 4 can be monitored. If a detection of an input from the dial key 4 is notified by PPI 10 at step S12, then at step S14 it is judged if the inputted key is "*" key representing a completion of registration, based on the imputted key code. If not, at step S16 the code of the inputted dial key 4 is outputted to PPI 10. Next, the inputted key code is stored in RAM 11. The above operations are repeated until the registration is completed. Specifically, if a telephone number "123-4567" is to be registered, the dial keys 4 are depressed in the order of "1, 2, 3, 4, 5, 6, and 7", and thereafter "*" key is depressed. Then, in accordance with the judgment at step S14, the flow advances to step S20 whereat a message of completion of registration previously stored in ROM 12 is outputted to PPI 10 to terminate the registration processes.

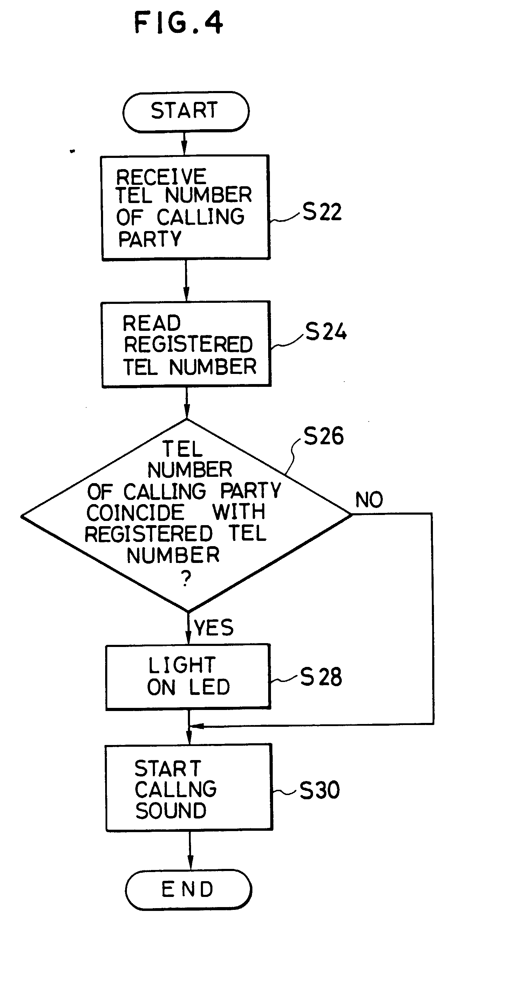

The operation of receiving a call will be described with reference to the flow chart shown in Fig. 4. Upon reception of a call from a calling party, at step S22 ISDN I/F 9 receives the calling party telephone number (originating telephone number information) and notifies CPU 14. At step S24, CPU 14 reads the telephone number registered in RAM. At step S26, the received calling party telephone number is compared with the registered telephone number read at step S24. If they are not coincident with each other, the flow advances to step S30. If coincident, data for lighting on LED are outputted to PPI 10 at step S28. At next step S30, PTM 13 is actuated to output a call reception sound pattern to the ringer circuit 18 so that the call reception sound generates from the loudspeaker 19.

As described above, a called party can discriminate at the time of call reception whether or not the calling party is a person the called party knows. Therefore, the called party can mentally prepare for that call.

In the above, a voice terminal equipment has been described by way of example. However, the present invention is also applicable to a facsimile terminal equipment, data terminal equipment and the like by using the circuit arrangement shown in Fig. 1.

Further, an LED is lit to discriminate a calling party in the above arrangement. However, a calling party can be discriminated by changing the type of calling sounds.

Furthermore, in the above arrangement, an LED is lit when the calling party telephone number coincides with the registered telephone number. However, on the contrary the LED may be lit when they are not coincident with each other.

As described so far, the originating number information from an originating party is compared with the particular number information stored in memory means, and the comparison result is notified. Therefore, it becomes possible for a called party to discriminate simultaneously with call reception whether or not the calling party is a person the called party knows, thus allowing to respond only to a necessary call reception.

In the preferred embodiment, telephone numbers of calling parties (calling party information) may be stored in association with values of attributes allocated to called parties so that upon a call reception, a call reception notice specific to the value of the attribute allocated to the called party can be generated.

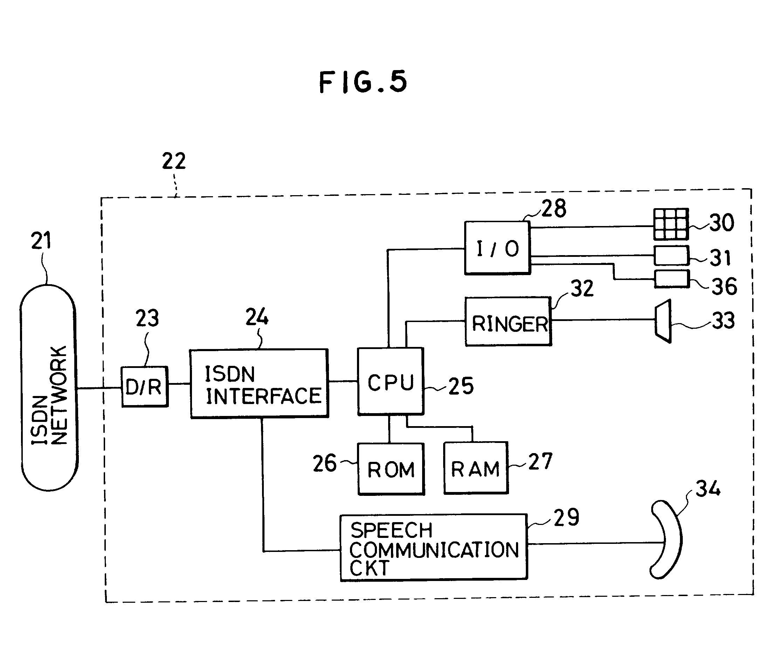

Fig. 5 shows the structure of a digital telephone set 22 connectable to an ISDN, according to the embodiment. In Fig. 5, reference numeral 21 represents an ISDN to which the digital telephone set 22 is connected via a well known driver/receiver 23. The driver/receiver 23 is connected to an ISDN interface 4 which is connected to a control path including a CPU 25 and to a speech communication circuit 29 constituting an analog signal path for sending and receiving a speech to and from a handset 34.

CPU 25 is constructed of a microprocessor and the like and controls the operation of the telephone set in accordance with control programs stored in a ROM 26 to be described later. CPU 25 is connected to a RAM 27 which stores therein, as will be described later, calling party information of the calling parties which are considered as likely to call the digital telephone set 22. The telephone set is operated by using a keyboard made of ten-keys 30, function keys 31 and the like. A display 36 made of an LCD panel and the like is provided for outputting various information.

Information on calling party information inputted from the keyboard and information to be displayed on the display 36 are inputted and outputted to and from CPU 25 via an input/output port 28.

CPU 25 is also connected to a ringer 32 which as well known generates a calling sound upon call reception. In this embodiment, the ringer 32 is adapted to generate a plurality of calling sounds discriminable in accordance with the sound tone, ringing pattern or the like. A calling sound generated by the ringer 32 is outputted to a loudspeaker 33.

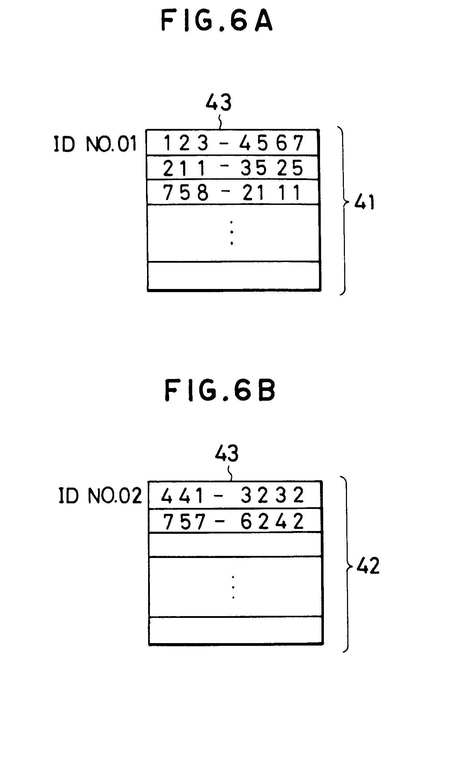

Figs. 6A and 6B shown the formats of RAM 27 in which is stored calling party information numbers of originating parties considered likely to call the telephone set. In Figs. 6A and 6B, reference numeral 43 represents a calling party information number identifying a calling party. The number 43 is stored in RAM 27 at a particular memory area 41 or 42 having a predetermined capacity.

The memory capacity per calling party information number and the memory capacity of each of the memory areas 41 and 42 are assumed to be fixedly predefined in this embodiment. As shown at the left sides of Figs. 6A and 6B, the memory areas 41 and 42 are assigned with ID numbers ID 01 and ID 02. The calling party information numbers of calling parties which are likely to call the telephone set are stored in the two memory areas, while classifying them with two corresponding different classes identified by ID numbers representing corresponding different values of attributes.

The ID numbers may be stored at the top of the memory areas 41 and 42, respectively, or the ID numbers may be discriminated from the start addresses of the memory areas 41 and 42. In Figs. 6A and 6B, two different ID numbers are used to classify the calling party information numbers. However, it is apparent that a number of ID numbers may be used. In the following description, it is assumed that five memory areas are provided respectively for ID numbers 01 to 05.

It can be considered that the classification of the calling party information is made according to the called parties which receive calls on the telephone set. For instance, if two persons are assigned to the telephone set, the ID numbers 01 and 02 shown in Figs. 6A and 6B are assigned to called parties A and B respectively. The called parties A and B each input from the key board the calling party information numbers of calling parties to which the called parties desire to respond, while using their own ID numbers, to thereby realise the classification arrangement shown in Figs. 6A and 6B.

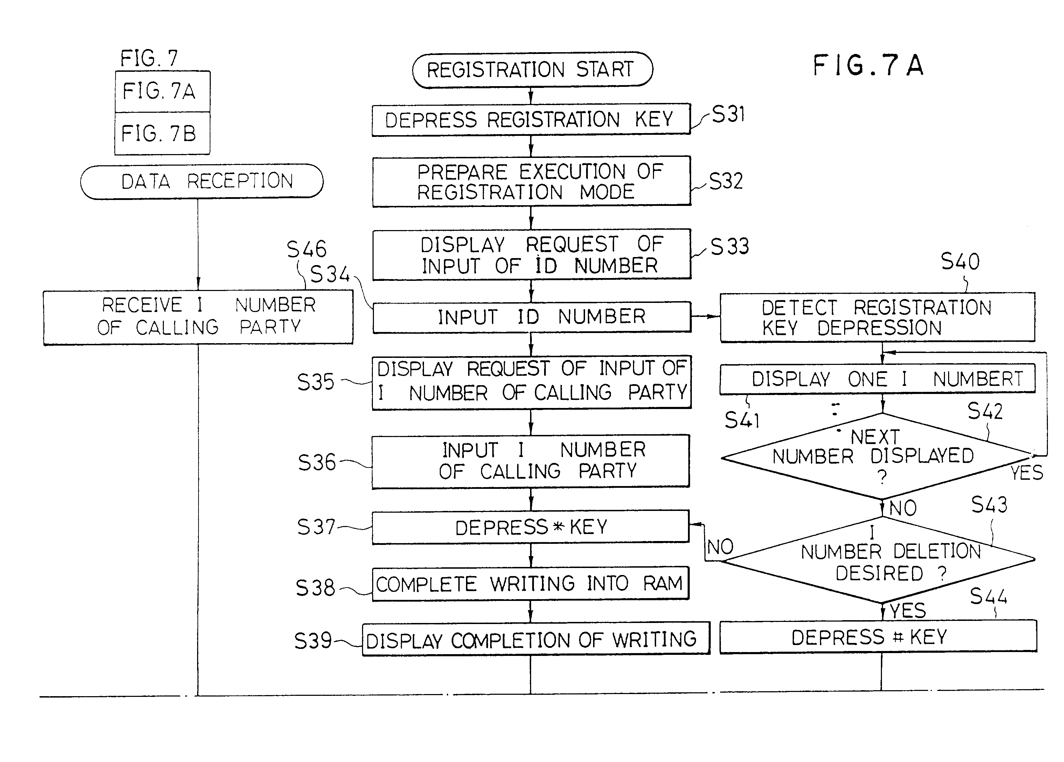

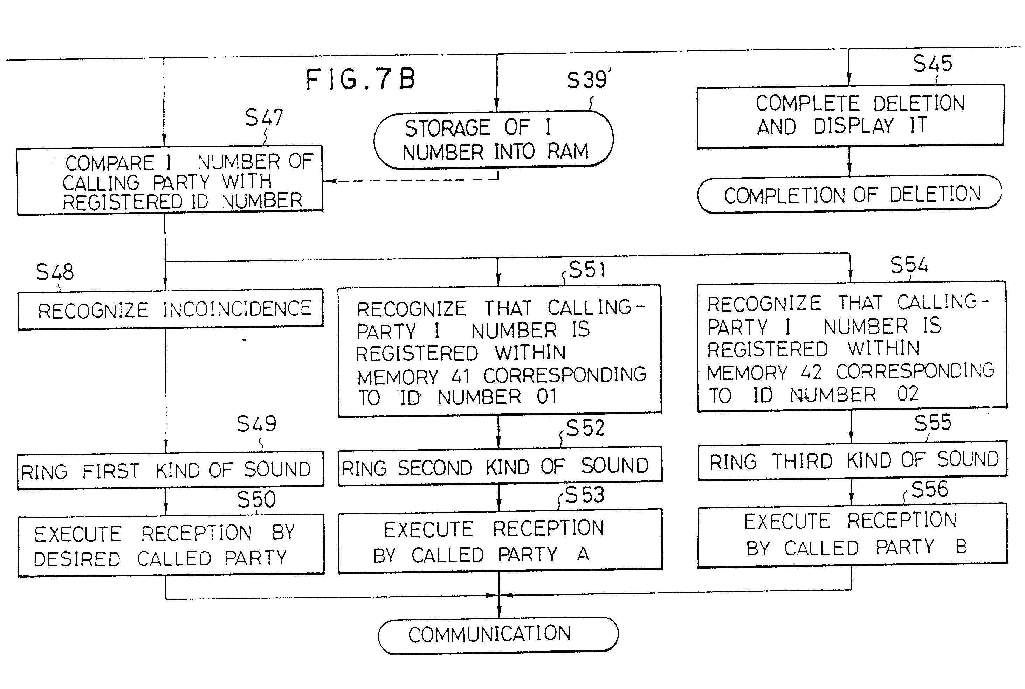

Fig. 7 is a flow chart illustrating the registration operation for a calling party information number (I Number), and the control procedure for a call reception operation. The procedure shown in Fig. 7 is stored in ROM 26 and executed by CPU 25.

In registering a calling party information number to which a particular party should respond, first at step S31 a registration key among the function keys 31 on the keyboard is depressed. Upon depression of the registration key, prepared is a memory allocation process and the like necessary for CPU 25 to execute the registration mode at step S32. Succeedingly at step S33, a notice indicating a request for an input of the number, such as a notice "Input a calling party number" is displayed on the display 36.

Next, at step S34, the ID number of the particular party is inputted by using the ten-keys 30. The called parties A and B each select a respective one of the ID numbers 01 to 05. It is assumed that the called parties A and B select ID numbers 01 and 02, respectively. For registration by the called party A, after "0" and "1" are inputted, "*" is inputted to terminate inputting the ID number.

At step S35, CPU 25 requests an input of calling party information numbers to which the called party should respond, by using the display 36 with a notice "Input Caller Identification Numbers" for example being displayed.

At step S36, the called party inputs the calling party information numbers of customers, friends or the like to which the called party wants to respond personally. At step S37, "*" is inputted to terminate the input of one calling party information number.

Specifically, upon depression of the ten-keys in the order of "1", "2", "3", "4", "5", "6", "7", and "*", the number "123-4567" of a calling party is stored as shown in Fig. 6A in RAM 27 at the memory area 41 corresponding to the ID number 01.

After completion of writing into RAM 27 at step S38, a message "Completion of Registration" or the like is displayed on the display 36 at step S39. Step S39' indicates the state where the calling party information numbers of calling parties are being stored in RAM 27 for respective ID numbers.

The editing processes for monitoring and deleting registered calling party information numbers are conducted at steps S40 to S45. In particular, if the registration key is depressed after inputting the ID number at step S34, this depression is detected at step S40. At step S41, one of the calling party information numbers in the memory area 41 or 42 corresponding to the ID number inputted at step S41 is picked up and displayed on the display 36.

This display process is sequentially repeated each time upon detection of that an instruction to display the next caller identification number has been effected by depressing the registration key for example at step S42. If the instruction to display the next calling party information number has been effected at step S42, the next calling party information number (telephone number) is picked up from the memory area 41 or 42 and displayed on the display 36.

After displaying the last calling party information number in the memory area, the display returns to the first calling party information number and then the following numbers. If the instruction at step S42 is not present, the flow advances to step S43 to judge if an operation to delete the calling party information number has been performed by depressing a deletion key among the function keys 41 for example.

If negative at step S43, the flow advances to step S37. If affirmative at step S43, a depression of "#" key among the ten-keys 30 is waited at step S44. Upon depression of this key, the calling party information number displayed at step S45 is deleted from the memory area corresponding to the ID number, and a notice of deletion completion is displayed on the display 36.

With the calling party information numbers of calling parties being stored in RAM for respective ID numbers, upon call reception from ISDN 21, a calling party information number of the calling party is received at step S46.

The calling party information number is supplied to CPU 25 via the ISDN interface 24. At step S47, CPU 25 compares the received number of the calling party with all the registered calling party information numbers stored in the memory areas 41 and 42 shown in Figs. 6A and 6B.

If it is confirmed at step S48 that the comparison result at step S47 shows no coincident identification number, the flow advances to step S49 whereat the ringer 32 is actuated with a first kind of sound. Then, any person can respond to the call with the handset 34 (step S50).

It is assumed that the ringer 32 has the first to third kinds of sound. If it is confirmed at step S51 that the calling party information number received at step S46 is stored in the memory area 41 assigned the ID number 01, then at step S52 the ringer 32 is actuated with the second kind of sound. Upon this kind of sound, the called party A can recognize that the call is directed to himself, and receives the call at step S53 to have a communication. On the other hand, if it is confirmed at step S54 that the calling party information number received at step S46 is present in the memory area 42 assigned the ID number 02, the flow advances to step S55 whereat the ringer 3 is actuated with the third kind of sound. Upon this kind of sound, the called party B can recognize that the call is directed to himself, and receives the call at step S56.

As described above, the calling party information numbers to which the called party wishes to respond are stored in association with the called party ID number. The calling party information number received from the ISDN is compared with the registered calling party information numbers. If there is the coincident number, the ringer is actuated with the kind of sound assigned to the ID number of the memory area in which the coincident number is stored. Therefore, the called party can recognize based on the kind of sound to which the call was directed so that the called party for that call can respond first, thus allowing an effective call reception operation.

In the above embodiment, the classification of calling party information is made according to the desired called party. It is needless to say that such classification may be made in accordance with the degree of importance of customers. As the call notice, the calling sound is used by way of example in the above embodiment. However, if light emitting means such as an LED is used as the means for generating the call notice, the classification of a calling party can be represented by the color of emitting light, light flashing timing or the like.

Further in the above embodiment, there is not provided means for confirming the call notice corresponding to the ID number classification of a calling party information number, prior to the actual call reception. However, after inputting an ID number at step S34 in Fig. 7A for registration of a calling party information number, a corresponding call notice may be generated to allow the operator to confirm the call notice assigned to the classification.

In the system for registering a calling party information number shown in Figs. 6A and 6B, a fixed memory capacity is provided for each memory area calling party information numbers classified with a common ID number. However, if the number of calling party information numbers classified for respective ID numbers differs greatly, there arises a problem of inefficient use of memory.

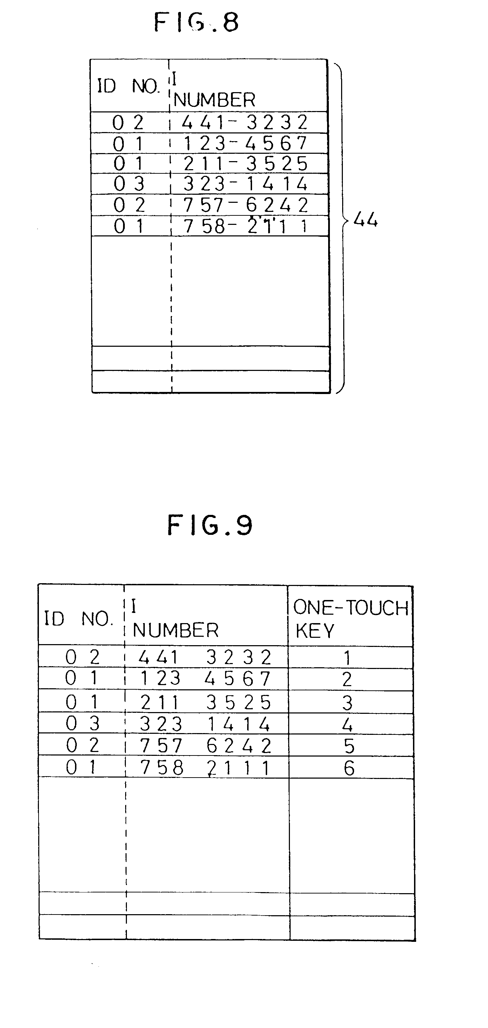

In consideration of the above problem, both the ID number and calling party information number are sequentially stored in a memory area 24 as shown in Fig. 8. With such an arrangement, the memory space can be used efficiently. In searching the calling party information number of a calling party, the memory area 24 is sequentially searched starting from the top calling party information number without using a particular addressing method, thus simplifying searching.

Furthermore, a particular key number or one-touch key number code for a telephone number together with the ID number may be stored in the memory of this type. With such an arrangement, the same memory can be efficiently used both for discriminating the classification of the calling party information number and for designating a full length telephone number for the reduced number telephone code.

Fig. 9 shows the memory format with one-touch key code stored in the memory shown in Fig. 8. Upon depression of one-touch key 21 for example among the function keys 11, CPU 25 reads "441-3232" from the memory (RAM 27) shown in Fig. 9 and initiates a call to the ISDN in accordance with the read-out number. Consequently, the memory area can be efficiently used as described above by storing one-touch key information in RAM 27.

Further, in the above embodiment, although the structure of a digital telephone set has been described as an example of a terminal equipment, the invention is also applicable to various communication apparatus such as facsimile apparatus, data communication terminal equipments, and the like.

As appreciated from the foregoing description, a communication apparatus connected to a communication network having a function to transmit, to a called party, information for discriminating a calling party, comprises means for storing a plurality of calling party information classified according to a plurality of classes defined in accordance with a corresponding plurality of values of an attribute constituting a discriminating criterion to be applied to the received calling party information, and means for generating a plurality of call notices in accordance with the discriminated value. In the communication apparatus, calling party information inputted from the communication network upon call reception is compared with the calling party information stored in the memory means, to thereby discriminate the value of the attribute of the inputted calling party information. A call notice is generated which is assigned to the discriminated value of the attribute by the call notice generating means. Therefore, by storing the calling party discrimination information while classifying it according to a plurality of available attributes, it becomes possible to generate upon call reception a call notice assigned to the value of the received calling party discrimination information. Accordingly, a user can discriminate based on the call notice whether or not the call was directed to himself, thus advantageously realizing a proper response by the user.

The present invention has been described with reference to the preferred embodiments. This invention however is not intended to be limited thereto, but various modifications are possible within the scope of the appended claims.

## Claims

1. A communication apparatus comprising:
memory means (27) operable to store calling party information (43) for a plurality of calling parties;
comparing means (25) for comparing received calling party information sent from a calling party and received at a called party with said calling party information stored in said memory means; and
notification means (32) for generating a notification of call reception,
characterised in that
the stored calling party information (43) is classified according to a plurality of classes (41,42,...) defined in accordance with a corresponding plurality of values (ID NO.01, ID NO.02, ...) of an attribute constituting a discrimination criterion to be applied to the received calling party information;
- the comparing means is arranged to discriminate the corresponding value (ID NO.) of the attribute by identifying the class associated with the received calling party information as a the result of the comparison effected; and
- the notification means is arranged to generate a notification in accordance with the discriminated value (ID NO.) of the attribute, said notification being a different notification for each of the classes.

2. A communication apparatus according to claim 1 in which the memory means is operable to classify the stored calling party information by storing calling party information to which different values of the attribute have been applied in different areas (41,42) of the memory means.

3. A communication apparatus according to claim 2 in which the memory means is operable to store a respective value (ID NO.01, ID NO.02) of the attribute at each one of the different areas (41,42).

4. A communication apparatus according to claim 2 in which the comparing means is operable to discriminate the value of the attribute of the stored calling party information from the start address (ID NO) of the area (41,42) of the memory in which the calling party information is stored.

5. A communication apparatus according to claim 1 in which the memory means is operable to classify the stored calling party information by storing a respective value of the attribute in association with the calling party information stored for each calling party.

6. A communication apparatus according to any preceding claim wherein said memory means is additionally operable to store one-touch or key dial information in association with said calling party information.

7. A communication apparatus according to any preceding claim wherein said communication apparatus is an apparatus connected to a communication network (21) having a function to transmit calling party information.

8. A communication apparatus according to claim 7 wherein said communication network (21) is an integrated service digital network.

9. A communication apparatus according to any preceding claim wherein said notification means is operable to generate a different reception sound for each of the classes.

10. A communication apparatus according to any one of claims 1 to 8 in which the notification means (5) is operable to generate a different visual notification for each of the classes.

11. A communication apparatus according to any preceding claim in which the notification means is operable to generate a first notification if the received calling party information does not match the stored calling party information for any calling party, a second notification if the received calling party information matches stored calling party information of a first class, and a third notification if the received calling party information matches a stored calling party information of for a second class.

12. A method of operating a communication apparatus comprising the steps of;
storing calling party information for a plurality of calling parties in a memory means (27);
comparing received calling party information sent from a calling party and received at a called party with said calling party information stored in said memory means; and
generating a notification of call reception;
characterised by the stored calling party information (43) for each calling party being stored with a value (ID NO.01, ID NO.02, ...) of an attribute constituting a discrimination criterion to be applied to the received calling party information;
classifying the stored calling party information (43) according to a plurality of classes (41,42,...) corresponding to the plurality of values (ID NO.01, ID NO.02,...) of the attribute;
discriminating in the comparing step the corresponding value (ID NO.) of the attribute by identifying the class associated with the received calling party information; and
generating a notification in accordance with the discriminated value of the attribute, the notification being a different notification for each of the classes.

## Patentansprüche

1. Kommunikationsgerät, mit:
einer Speichereinrichtung (27), die betreibbar ist, um eine Anruferinformation (43) für eine Vielzahl von anrufenden Teilnehmern zu speichern;
einer Vergleichseinrichtung (25) zum Vergleichen der erhaltenen Anruferinformation, die von einem anrufenden Teilnehmer gesendet und bei einem angerufenen Teilnehmer erhalten wird, mit einer in der Speichereinrichtung gespeicherten Anruferinformation; und
einer Meldeeinrichtung (32) zum Erzeugen einer Meldung des Anrufempfangs,
**dadurch gekennzeichnet, daß**
die gespeicherte Anruferinformation (43) gemäß einer Vielzahl von Klassen (41, 42) eingestuft ist, die in Übereinstimmung mit einer entsprechenden Vielzahl von Werten (ID-Nr. 01, ID-Nr. 02, ...) eines ein Unterscheidungsmerkmal bildendes Attributs definiert sind, das auf die erhaltene Anruferinformation angewendet wird;
die Vergleichseinrichtung dazu angeordnet ist, um als Ergebnis des bewirkten Vergleichs den entsprechenden Wert (ID-Nr.) des Attributs durch Identifizieren der mit der erhaltenen Anruferinformation verbundenen Klasse zu unterscheiden; und
die Meldeeinrichtung dazu angeordnet ist, um eine Meldung in Übereinstimmung mit dem unterschiedenen Wert (ID-Nr.) des Attributs zu erzeugen, wobei die Meldung eine für jede einzelne der Klassen verschiedene Meldung ist.

2. Kommunikationsgerät nach Anspruch 1, bei dem die Speichereinrichtung betreibbar ist, um die gespeicherten Anruferinformationen einzustufen, indem die Anruferinformationen, auf die verschiedene Attributswerte angewendet worden sind, in verschiedenen Bereichen (41, 42) der Speichereinrichtung gespeichert werden.

3. Kommunikationsgerät nach Anspruch 2, bei dem die Speichereinrichtung betreibbar ist, um einen jeweiligen Attributswert (ID-Nr. 01, ID-Nr. 02) in jedem einen der verschiedenen Bereiche (41, 42) zu speichern.

4. Kommunikationsgerät nach Anspruch 2, bei dem die Vergleichseinrichtung betreibbar ist, um den Attributswert der gespeicherten Anruferinformation von der Anfangsadresse (ID-Nr.) des Bereichs (41, 42) des Speichers zu unterscheiden, in dem die Anruferinformation gespeichert ist.

5. Kommunikationsgerät nach Anspruch 1, bei dem die Speichereinrichtung betreibbar ist, um die gespeicherten Anruferinformationen einzustufen, indem ein jeweiliger Attributwert in Verbindung mit der für jeden anrufenden Teilnehmer gespeicherten Anruferinformation gespeichert wird.

6. Kommunikationsgerät nach einem der vorangehenden Ansprüche, wobei die Speichereinrichtung zusätzlich betreibbar ist, um eine Einmalberührungs- oder Tastenwahl-Informationen in Verbindung mit der Anruferinformation zu speichern.

7. Kommunikationsgerät nach einem der vorangehenden Ansprüche, wobei das Kommunikationsgerät ein Gerät ist, das mit einem Kommunikationsnetz (21) verbunden ist, das eine Funktion aufweist, die Anruferinformation zu übermitteln.

8. Kommunikationsgerät nach Anspruch 7, wobei das Kommunikationsnetz (21) ein diensteintegrierendes digitales Netz ist.

9. Kommunikationsgerät nach einem der vorangehenden Ansprüche, wobei die Meldeeinrichtung betreibbar ist, um ein verschiedenes Empfangsgeräusch für jede der Klassen zu erzeugen.

10. Kommunikationsgerät nach einem der vorangehenden Ansprüche 1 bis 8, bei dem die Meldeeinrichtung betreibbar ist, um eine verschiedene sichtbare Meldung für jede der Klassen zu erzeugen.

11. Kommunikationsgerät nach einem der vorangehenden Ansprüche, bei dem die Meldeeinrichtung betreibbar ist, um eine erste Meldung, wenn die erhaltenden Anruferinformation mit den gespeicherten Anruferinformationen für keinen Anrufer übereinstimmt, eine zweite Meldung, wenn die erhaltene Anruferinformation mit einer Anruferinformation der ersten Klasse übereinstimmt, und eine dritte Meldung zu erzeugen, wenn die erhaltene Anruferinformation mit einer gespeicherten Anruferinformation der zweiten Klasse übereinstimmt.

12. Verfahren zum Betreiben eines Kommunikationsgerätes, mit den Schritten:
Speichern von Anruferinformationen für eine Vielzahl von anrufenden Teilnehmern in einer Speichereinrichtung (27); Vergleichen der erhaltenen Anruferinformation, die von einem anrufenden Teilnehmer gesendet und bei einem angerufenen Teilnehmer erhaltenen wird, mit einer in der Speichereinrichtung gespeicherten Information; und
Erzeugen einer Meldung des Anrufempfangs;
**gekennzeichnet durch:**
Speichern der Anruferinformation (43) für jeden anrufenden Teilnehmer, mit einem Wert (ID Nr. 01, ID Nr. 02, ...) eines Attributs, das ein auf die erhaltene Anruferinformation anwendbares Unterscheidungsmerkmal bildet;
Einstufen der gespeicherten Anruferinformation (43) gemäß einer Vielzahl von Klassen (41, 42, ...), die der Vielzahl an Werten (ID Nr. 01, ID Nr. 02, ...) der Attribute entspricht;
Unterscheiden des entsprechenden Werts (ID-Nr.) des Attributs in dem Vergleichsschritt durch Identifizieren der mit der erhaltenden Anruferinformation verbundenen Klasse; und Erzeugen einer Meldung gemäß einem unterschiedenen Wert des Attributs, wobei die Meldung eine verschiedene Meldung für jede der Klassen ist.

## Revendications

1. Appareil de communication, comprenant:
un moyen de mémoire (27) pouvant fonctionner pour emmagasiner des informations d'appelant (43) pour une pluralité d'appelants;
un moyen de comparaison (25) pour comparer des informations d'appelant envoyées depuis un appelant et reçues du côté appelé avec lesdites informations d'appelant emmagasinées dans ledit moyen de mémoire; et
un moyen de notification (32) pour engendrer une notification de réception d'appel,
caractérisé en ce que
les informations d'appelant emmagasinées (43) sont classifiées conformément à une pluralité de classes (41, 42, ...) définies conformément à une pluralité correspondante de valeurs ( N°ID.01, N°ID.02, ...) d'un attribut constituant un critère de discrimination à appliquer aux informations d'appelant reçues;
- le moyen de comparaison est agencé de manière à discriminer la valeur correspondante (N° ID) de l'attribut en identifiant la classe associée aux informations d'appelant reçues comme étant le résultat de la comparaison effectuée; et
- le moyen de notification est agencé de manière à engendrer une notification conformément à la valeur discriminée (N0 ID) de l'attribut, ladite notification étant une notification différente pour chacune des classes.

2. Appareil de communication selon la revendication 1, dans lequel le moyen de mémoire peut fonctionner pour classifier les informations d'appelant emmagasinées en emmagasinant des informations d'appelant auxquelles différentes valeurs de l'attribut ont été appliquées dans différentes zones (41, 42) du moyen de mémoire.

3. Appareil de communication selon la revendication 2, dans lequel le moyen de mémoire peut fonctionner pour emmagasiner une valeur respective (N°.ID 01, N°.ID 02) de l'attribut à chacune des différentes zones (41, 42).

4. Appareil de communication selon la revendication 2, dans lequel le moyen de comparaison peut fonctionner pour discriminer la valeur de l'attribut des informations d'appelant emmagasinées à partir de l'adresse de début (N° ID) de la zone (41, 42) de la mémoire dans laquelle sont emmagasinées les informations d'appelant.

5. Appareil de communication selon la revendication 1, dans lequel le moyen de mémoire peut fonctionner pour classifier les informations d'appelant emmagasinées en emmagasinant une valeur respective de l'attribut en association avec les informations d'appelant emmagasinées pour chaque appelant.

6. Appareil de communication selon l'une quelconque des revendications précédentes, dans lequel ledit moyen de mémoire peut en outre fonctionner pour emmagasiner des informations d'enregistrement de numéro d'appel par pression de touches ou d'une touche à effleurement en association avec lesdites informations d'appelant.

7. Appareil de communication selon l'une quelconque des revendications précédentes, dans lequel ledit appareil de communication est un appareil connecté à un réseau de communication (21) ayant pour fonction de transmettre des informations d'appelant.

8. Appareil de communication selon la revendication 7, dans lequel ledit réseau de communication (21) est un réseau numérique à intégration de services.

9. Appareil de communication selon l'une quelconque des revendications précédentes, dans lequel ledit moyen de notification peut fonctionner pour engendrer un son de réception différent pour chacune des classes.

10. Appareil de communication selon l'une quelconque des revendications 1 à 8, dans lequel le moyen de notification (5) peut fonctionner pour engendrer une notification visuelle différente pour chacune des classes.

11. Appareil de communication selon l'une quelconque des revendications précédentes, dans lequel le moyen de notification peut fonctionner pour engendrer une première notification si les informations d'appelant reçues ne correspondent pas aux informations d'appelant emmagasinées pour un appelant quelconque, une deuxième notification si les informations d'appelant reçues correspondent à des informations d'appelant emmagasinées de première classe, et une troisième notification si les informations d'appelant reçues correspondent à des informations d'appelant emmagasinées d'une deuxième classe.

12. Procédé de fonctionnement d'un appareil de communication, comprenant les étapes consistant à:
emmagasiner des informations d'appelant pour une pluralité d'appelants dans un moyen de mémoire (27) ;
comparer des informations d'appelant reçues envoyées depuis un appelant et reçues du côté appelé avec lesdites informations d'appelant dans ledit moyen de mémoire; et
engendrer une notification de réception d'appel;
caractérisé par les informations d'appelant emmagasinées (43) pour chaque appelant qui sont emmagasinées avec une valeur (N° ID 01, N° ID 02, ...) d'un attribut constituant un critère de discrimination à appliquer aux informations d'appelant reçues;
classifier les informations d'appelant emmagasinées (43) conformément à une pluralité de classes (41, 42, ...) correspondant à la pluralité de valeurs (N° ID 01, N° ID 02, ...) de l'attribut;
discriminer dans l'étape de comparaison la valeur correspondante (N° ID) de l'attribut en identifiant la classe associée aux informations d'appelant reçues; et
engendrer une notification conformément à la valeur discriminée de l'attribut, la notification étant une notification différente pour chacune des classes.
